Europäisches Patentamt

European Patent Office

Office européen des brevets

(11) Veröffentlichungsnummer: **0 496 963 A1**

# EUROPÄISCHE PATENTANMELDUNG

(21) Anmeldenummer: **91119411.6**

(51) Int. Cl.⁵: **C03B 5/235**, F23M 5/02

(22) Anmeldetag: **14.11.91**

(30) Priorität: **01.02.91 DE 4103052**

(43) Veröffentlichungstag der Anmeldung:
**05.08.92 Patentblatt 92/32**

(84) Benannte Vertragsstaaten:
**BE DE FR GB IT NL**

(71) Anmelder: **KÖRTING HANNOVER AG**
**Badenstedter Strasse 56**
**W-3000 Hannover 91(DE)**

(72) Erfinder: **Sieger, Werner**
**Gevekerkamp 45**
**W-3000 Hannover 91(DE)**
Erfinder: **Hinze, Wolfram**
**Herthastrasse 12**
**W-3000 Hannover 71(DE)**

(74) Vertreter: **Leine, Sigurd, Dipl.-Ing. et al**
**Dipl.-Ing. Sigurd Leine Dipl.-Phys. Dr.**
**Norbert König Patentanwälte**
**Burckhardtstrasse 1**
**W-3000 Hannover 1(DE)**

(54) **Ofen, insbesondere Glasschmelzofen, mit einer besonderen Form eines Düsensteins zum Aufnehmen eines Brenners.**

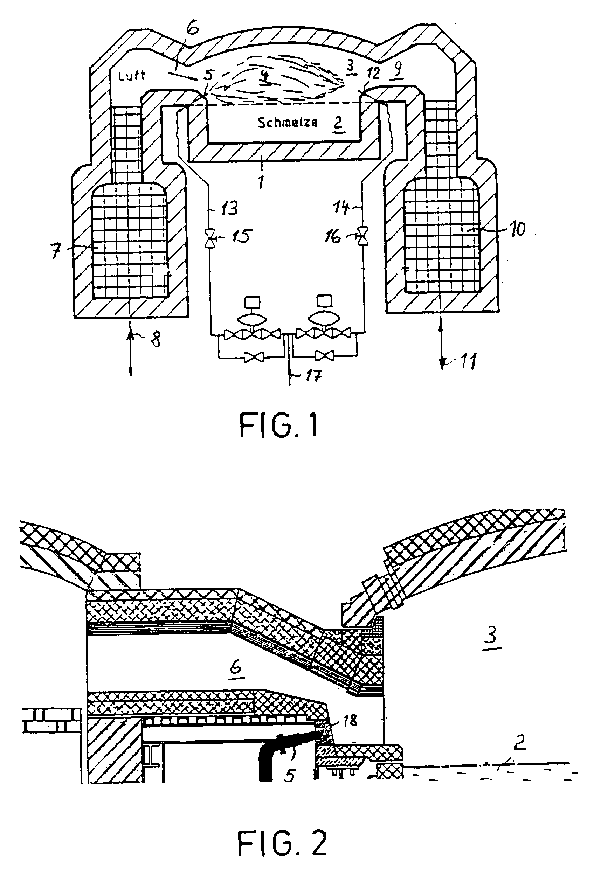

(57) Ofen, insbesondere Glasschmelzofen, mit einer in der Wandung zum Brennraum hin angeordneten Öffnung, durch die eine Düse (5) für Brennstoff in den Brennraum gerichtet ist. In die Öffnung ist ein Düsenstein (18) Fig.2) eingesetzt, der einen Durchlaß (21) für den aus der Düse austretenden Brennstoff aufweist und an den die Düse dicht angrenzt. Der Düsenstein weist im Bereich des Durchlasses auf der dem Brennraum abgewandten Seite eine Ausnehmung (19) auf, in die sich die Düse erstreckt, die dicht an dem Boden (30) der Ausnehmung angrenzt. Zwischen der Düse (5) und der Innenwandung (20) der Ausnehmung (19) ist ein Zwischenraum gebildet. Aufgrund der vorzugsweise kegelförmigen Ausnehmung in dem Düsenstein ist der Durchlaß für den Brennstoff in dem Düsenstein beträchtlich verkürzt, so daß die Gefahr einer Rezirkulation von Brennstoff und damit dessen Ansetzen an der Innenwandung des Durchlasses vermieden ist. Damit kann auch keine Verkokung an dieser Stelle eintreten, so daß ein regelmäßiges Säubern des Durchlasses in dem Düsenstein oder dessen Auswechseln nicht erforderlich ist.

FIG. 3

Die Erfindung betrifft einen Ofen, insbesondere Glasschmelzofen der im Oberbegriff des Anspruchs 1 genannten Art.

Durch den Aufsatz "Erfahrungen mit Erdgasbrennern an Glasschmelzöfen" von Werner Sieger in der so betitelten Firmendruckschrift der Firma Körting Hannover AG, veröffentlicht am 7. April 1986 in der Sitzung des Fachauschusses Nr. 2 "Ofenbau und Wärmewirtschaft der deutschen glastechnischen Gesellschaft", ist ein Ofen der betreffenden Art bekannt, bei dem der Durchlaß für den Brennstoff, entweder Gas oder zerstäubtes Öl, oder Kohlestaub, sich zum Brennraum hin entsprechend der natürlichen, im wesentlichen konischen Erweiterung des Brennstoffes kegelförmig erweitert. Der Nachteil eines solchen Düsensteines besteht insbesondere bei Ölfeuerung darin, daß durch Rezirkulationen Brennstoffteilchen nicht in den Brennraum gelangen, sondern sich an dem Düsenstein festsetzen und dort verkoken. Es ist daher erforderlich, die Düsensteine regelmäßig zu reinigen oder auszutauschen. Dies erfordert wegen der hohen Temperaturen einen verhältnismäßig hohen Aufwand und ist außerdem mit Risiken verbunden. Die Rezirkulationen entstehen vor allem dadurch, daß die Stirnseite der Düse dicht an den Düsenstein angrenzt, um so das Eintreten von Nebenluft zu verhindern, die zu einer Anhebung des Energieverbrauchs führen und in der Flammwurzel die direkte Bildung von Stickoxiden fördern würde. Durch die Firmendruckschrift "Bedienungs- und Betriebsanleitung für Körting-Gasjettyp JG" der Firma Körting Hannover AG in Hannover ist ein Ofen der betreffenden Art bekannt, bei dem zwischen der Mündung der Brennerdüse und dem Düsenstein ein Abstand von 15 bis 20 mm vorhanden ist. Durch die Injektorwirkung des Brennstoffstrahles wird dabei durch den zwischen Düsenstein und Düse gebildeten Spalt kalte Falschluft eingesaugt. Diese wirkt zwar Rezirkulationen, und zwar mit einem Ansetzen von Brennstoff an der Wandung des Durchlasses durch den Düsenstein entgegen, so daß auch keine Verkokungen auftreten können, jedoch erhöht sich durch die kalte Falschluft der Energieverbrauch, und es werden in der Flammwurzel in erhöhtem Maße Stickoxide gebildet.

Der Erfindung liegt die Aufgabe zugrunde, einen Ofen der betreffenden Art zu schaffen, bei dem ein Ansetzen von Brennstoff und dessen Verkokung an der Innenwandung des Durchlasses durch den Düsenstein vermieden wird, ohne daß der Energieverbrauch und die Bildung von Stickoxiden erhöht wird.

Die der Erfindung zugrundeliegende Aufgabe wird durch die im Kennzeichen des Anspruchs 1 angegebene Lehre gelöst.

Der Grundgedanke dieser Lehre besteht darin, grundsätzlich von einer Anordnung auszugehen, bei der von dem Brennstoffstrahl keine kalte Falschluft angesaugt werden kann, dabei den Weg des Brennstoffstrahles durch den Durchlaß in dem Düsenstein so zu verkürzen, daß die Gefahr einer Rezirkulation und damit eine Rückführung von Brennstoffanteilen und damit auch deren Ansetzen an der Innenwandung des Durchlasses in dem Düsenstein verringert wird, so daß dort auch keine Verkokungen des Brennstoffes auftreten können. Eine Reinigung oder ein Austausch des bzw. der Düsensteine in einem Ofen ist daher nicht mehr erforderlich.

Die Verkürzung des Durchlasses in dem Düsenstein erfolgt dadurch, daß auf der den Brennraum abgewandten Seite des Düsensteines eine Ausnehmung vorgesehen ist, aufgrund deren die Mündung der Düse dichter an den Ofenraum heranrückt und damit gleichzeitig der Durchlaß durch den Düsenstein wesentlich verkürzt wird. Zur Vermeidung eines Wärmeüberganges von der Wandung der Ausnehmung in dem Düsenstein auf die Düse ist zwischen beiden ein Zwischenraum vorgesehen. Diesem kann gegebenenfalls Kühlluft zum Kühlen der Düse zugeführt werden.

Die Ausnehmung in dem Düsenstein verjüngt sich zweckmäßigerweise zum Ofen hin, vorzugsweise konisch, so daß die Wandung der Ausnehmung an jeder Stelle den größtmöglichen Abstand von der Düse hat.

Zwischen der Stirnseite der Düse und dem Boden der Ausnehmung ist zwesckmäßigerweise eine Dichtung angeordnet. Diese sorgt nicht nur für eine gute Abdichtung zwischen der Stirnseite der Düse und dem Boden der Ausnehmung in dem Düsenstein, sondern ermöglicht auch eine Änderung der Richtung der Düse in gewissen Grenzen, ohne daß die Abdichtung zwischen Düse und Düsenstein beeinträchtigt wird. Die Dichtung besteht dabei zweckmäßigerweise aus Keramikfasern.

Um für die Anlage der Dichtung an der Stirnseite der Düse eine ausreichende Fläche zu schaffen, ist die Stirnseite der Düse wenigstens teilweise durch einen vergrößerten Kopf gebildet. Dieser kann durch ein Anlagestück gebildet sein, das sich an einer Schulter der Düse abstützt und an der Dichtung anliegt.

Anhand der Zeichnung soll die Erfindung näher erläutert werden.

Fig. 1    zeigt schematisch im Schnitt eine Gesamtansicht eines Ausführungsbeispiels eines Ofens gemäß der Erfindung,

Fig. 2    zeigt einen vergrößerten Ausschnitt aus Fig. 1 im Bereich der Düse und

Fig. 3    zeigt wesentlich vergrößert den Düsenstein aus Fig. 2 mit einem Teil der Düse.

Fig. 1 zeigt den prinzipiellen Aufbau eine Ofens gemäß der Erfindung, der in dieser Darstellung die Merkmale der Erfindung noch nicht zeigt und daher im wesentlichen den üblichen Aufbau eines Ofens zeigt, auf den sich die Erfindung bezieht. Es handelt sich um einen Glasschmelzofen mit einer Wanne 1, in der sich eine Schmelze 2 aus Glas befindet, über der im Bereich eines Brennraumes 3 eine Flamme 4 gebildet ist, die durch eine Düse 5 mit Brennstoff und über einen Kanal 6 mit Luft versorgt wird, die in bekannter Weise in einer mit einem Gitterwerk versehenen heißen Kammer 7 vorgewärmt wird, in die sie in Richtung eines Pfeiles 8 einströmt.

Das heiße Gas aus dem Brennraum 4 strömt über einen Kanal 9 in eine mit einem Gitterwerk versehene Kammer 10, das so vorgewärmt wird, und dann aus dieser heraus in Richtung eines Pfeiles 11.

Es ist erkennbar, daß der Ofen in bekannter Weise symmetrisch aufgebaut ist und wechselweise in entgegengesetzte Richtungen betrieben wird, wobei eine weitere Düse 12 vorgesehen ist. Die Düsen 5 und 12 sind über Leitungen 13 und 14 und Ventile 15 und 16 sowie weitere, hier nicht interessierende Regeleinrichtungen mit einer Gasspeiseleitung 17 verbunden.

Fig. 2 zeigt einen Schnitt durch den Ofen gemäß Fig. 1 im Bereich der Düse 5, die mit ihrer Stirnseite dicht an einen Düsenstein 18 angrenzt.

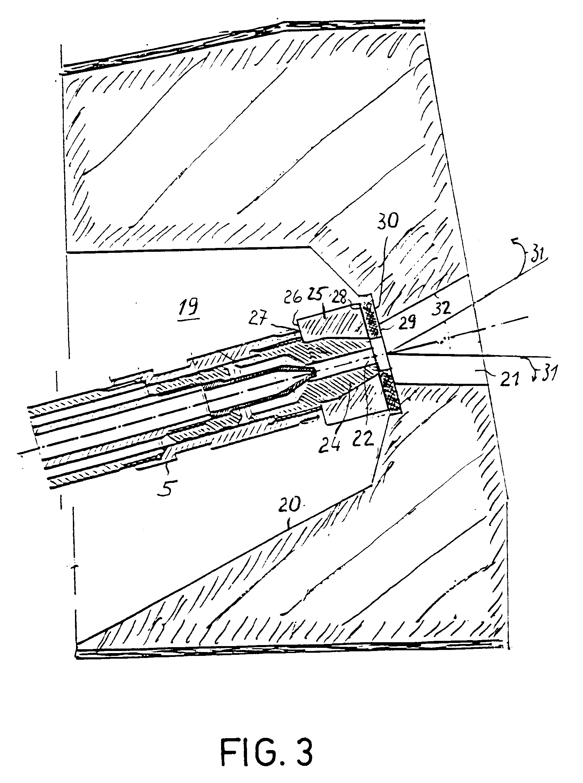

Dieser Düsenstein 18 ist stark vergrößert in Fig. 3 zusammen mit dem vorderen Teil der Düse 5 dargestellt. Der Düsenstein 18 weist auf der der Düse 5 zugewandten Seite eine kegelförmige Ausnehmung 19 auf, die sich mit einer Wandung 20 kegelförmig zu einem Durchlaß 21 hin verjüngt. Der Durchlaß 21 ist sehr kurz und umgibt nur über eine sehr kurze Wegstrecke einen aus einer Mündung 22 der Düse 5 austretenden Brennstoffkegel 23.

Ein vorderes Ende 24 der Düse 5 weist eine kegelige Außenfläche auf, die von einem Anlagestück 25 umgeben ist, das sich mit einer hinteren Fläche 26 an einer Schulter 27 der Düse abstützt, während eine vordere Fläche 28 des Anlagestükkes 25 an einer Dichtung 29 aus Keramikfasern anliegt, die ihrerseits an einem Boden 30 der Ausnehmung 19 anliegt. Die Dichtung 29 ist etwas nachgiebig, so daß die Richtung der Düse 5 in gewissen Grenzen geändert werden kann, ohne daß eine Undichtigkeit zwischen der Düse 5 und dem Düsenstein 18 auftreten kann.

Aufgrund der Ausnehmung 19 ist der Durchlaß 21 entsprechend kurz, so daß die Gefahr verringert ist, daß Brennstoff aus dem Brennstoffkegel 23 in Richtung von Pfeilen 31 zurück in den Bereich des Durchlasses 21 gelangt und sich dort an einer Wandung 32 des Durchlasses 21 ansetzt, was zu Verkokungen führen würde, die ein regelmäßiges Auswechseln des Düsensteines 18 oder ein Säubern des Durchlasses 21 erforderlich machen würde.

## Patentansprüche

1. Ofen, insbesondere Glasschmelzofen,
   - mit einer in der Wandung des Ofens oder im Bereich einer Mündung eines Kanals zur Zuführung von Brennluft in den Brennraum angeordneten Öffnung,
   - mit einer außerhalb des Ofens angeordneten und durch die Öffnung gerichteten Düse zur Einleitung von Brennstoff und
   - mit einem Düsenstein, der in die Öffnung eingesetzt ist, der einen Durchlaß für den aus der Düse austretenden Brennstoff aufweist und an den die Düse dicht angrenzt,

   **dadurch gekennzeichnet,**
   - daß der Düsenstein (18) im Bereich des Durchlasses (21) auf der dem Brennraum (3) abgewandten Seite eine Ausnehmung (19) aufweist,
   - daß sich die Düse (5) in die Ausnehmung (19) erstreckt und dicht an einen Boden (30) der Ausnehmung (19) angrenzt und
   - daß zwischen der Düse (5) und einer Innenwandung (20) der Ausnehmung (19) ein Zwischenraum gebildet ist.

2. Ofen nach Anspruch 1, **dadurch gekennzeichnet,** daß sich die Ausnehmung (19) zum Brennraum (3) hin vorzugsweise konisch verjüngt.

3. Ofen nach Anspruch 1, **dadurch gekennzeichnet,** daß zwischen der Stirnseite der Düse (5) und dem Boden (30) der Ausnehmung (19) eine Dichtung (29) angeordnet ist.

4. Ofen nach Anspruch 1, **dadurch gekennzeichnet,** daß die Dichtung (29) aus Keramikfasern besteht.

5. Ofen nach Anspruch 3, **dadurch gekennzeichnet,** daß die Stirnseite der Düse (5) wenigstens teilweise durch einen vergrößerten Kopf gebildet ist.

6. Ofen nach Anspruch 5, **dadurch gekennzeichnet,** daß der vergrößerte Kopf der Düse (5) durch ein Anlagestück (25) gebildet ist, das sich an einer Schulter (27) der Düse (5) abstützt und an der Dichtung (29) anliegt.

FIG.1

FIG. 2

4

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-0 530 596 (V.GRENIER) <br> * Seite 1, Zeile 56 - Zeile 61; Abbildungen 1,8-10 * <br> --- | 1-3,5,6 | C03B5/235 <br> F23M5/02 |
| X | FR-A-0 843 045 (SAINT-GOBAIN SA) <br> * Seite 2, Zeile 59 - Seite 3, Zeile 30; Abbildungen 1,3 * <br> --- | 1-3,5 | |
| X <br> Y | FR-A-1 582 409 (LAIDLAW, DREW & CO.LTD.) <br> * Seite 2, Zeile 13 - Zeile 24; Abbildung 1 * <br> --- | 1,2,5 <br> 3,6 | |
| A <br> Y | DE-A-3 218 392 (SORG-GMBH & CO. KG) <br> * Seiten 9,10; Abbildung * <br> --- | 1,5 <br> 3,6 | |
| A | DE-A-3 202 105 (K-H.FRICKEL) <br> * Seite 10, Absatz 2; Abbildung 2 * <br> --- | 3 | |
| A | US-A-4 313 722 (J.S.YIGDALL) <br> * Spalte 5, Zeile 42 - Zeile 55; Abbildung 3 * <br> --- | 1,3,5,6 | |
| A | DE-A-3 149 987 (KÖRTING HANNOVER AG) <br> * Abbildung 2 * <br> --- | 1 | **RECHERCHIERTE SACHGEBIETE (Int. Cl.5 )** |
| A | US-A-4 302 179 (R.S.PONT) <br> * Abbildung 1 * <br> ----- | 1 | C03B <br> F23M <br> F23C <br> F27D |

Der vorliegende Recherchenbericht wurde für alle Patentansprüche erstellt

| Recherchenort | Abschlußdatum der Recherche | Prüfer |
|---|---|---|
| DEN HAAG | 08 MAI 1992 | STROUD J.G. |